Europäisches Patentamt

European Patent Office

Office européen des brevets

(19)

(11) Veröffentlichungsnummer: **0 461 360 A1**

# (12) EUROPÄISCHE PATENTANMELDUNG

(21) Anmeldenummer: 91105932.7

(22) Anmeldetag: 13.04.91

(51) Int. Cl.⁵: **B60K 37/00**

(30) Priorität: 02.06.90 DE 4017895

(43) Veröffentlichungstag der Anmeldung:
**18.12.91 Patentblatt 91/51**

(84) Benannte Vertragsstaaten:
**FR GB IT SE**

(71) Anmelder: **MERCEDES-BENZ AKTIENGESELLSCHAFT**
**Postfach 60 02 02**
**W-7000 Stuttgart 60(DE)**

(72) Erfinder: **Weller, Karl-Heinz R.**
**Gartenstrasse 18**
**W-7016 Gerlingen(DE)**
Erfinder: **Kubsch, Erich**
**Kalkofenweg 23/3**
**W-7252 Weil der Stadt - 5(DE)**

(54) **Anordnung von Bedienelementen von Fahrzeugkomponenten.**

(57) Bei einer Anordnung von Bedienelementen von Fahrzeugkomponenten werden einzustellende Funktionen der eingeschalteten Fahrzeugkomponenten (1.1, 1.2, 1.3, 1.4) auf einem Display dargestellt. Diese Funktionen werden am Rand des Displays sichtbar gemacht. In unmittelbarer räumlicher Nähe sind Schalter (1.1.1, 1.1.2, 1.2.1, 1.3.1 u.s.w.) angebracht, deren Betätigung das Schalten der angezeigten einzustellenden Funktion bewirkt.

EP 0 461 360 A1

Die Erfindung betrifft eine Anordnung von Bedienelementen von Fahrzeugkomponenten gemäß dem Oberbegriff des Patentanspruches 1.

Es ist bereits eine gattungsgemäße Anordnung von Bedienelementen von Fahrzeugkomponenten aus der nicht vorveröffentlichten Patentanmeldung P 40 10 025.1-34 bekannt, wonach bei der Bedienung mehrerer Fahrzeugkomponenten Darstellungen der entsprechenden Fahrzeugkomponenten auf einem Display erfolgen. Die Bedienung der Fahrzeugkomponenten erfolgt dann mittels einer Fernbedienung, in die die Tastatur integriert ist. Durch Drücken einer der Fahrzeugkomponentenauswahltasten auf der Tastatur wird die entsprechende Fahrzeugkomponente ausgewählt. Mit dieser Auswahl einer Fahrzeugkomponente wird auf dem Display eine symbolische Darstellung der entsprechenden Fahrzeugkomponente ausgegeben. Diese symbolische Darstellung beinhaltet eine Zuordnung von Fahrzeugkomponenten-spezifischen Einstellmöglichkeiten zu bestimmten Tasten der Tastatur. Gemeinsame Einstellmöglichkeiten der Fahrzeugkomponenten werden dabei an jeweils derselben Stelle des Bildschirms in jeweils derselben Darstellungsform angezeigt. Dabei sind Tasten vorgesehen, die eine unveränderliche Funktion ausführen.

Aus der GB-PS 1 187 985 ist es weiterhin bekannt, zu in einer Reihe angeordneten Schaltern in Abhängigkeit von den Schaltern zugeordneten Funktionen in unmittelbarer Nähe zu den Schaltern die entsprechenden Skalenteilungen anzuzeigen. Es ist dabei vorgesehen, daß die Anzeige unterschiedlicher Skalenteilungen angezeigt wird, indem vom Benutzer durch unmittelbaren manuellen Eingriff die jeweiligen Skalenteilungen sichtbar gemacht werden.

Aufgabe der Erfindung ist es, eine Anordnung von Bedienelementen von Fahrzeugkomponeten derart auszubilden, daß eine möglichst einfache Bedienung der Fahrzeugkomponenten gewährleistet ist.

Diese Aufgabe wird bei einer gattungsgemäßen Anordnung von Bedienelementen von Fahrzeugkomponenten erfindungsgemäß mit den kennzeichnenden Merkmalen des Anspruchs 1 gelöst, wobei die Merkmale der Unteransprüche vorteilhafte Aus- und Weiterbildungen kennzeichnen.

Vorteilhaft wirkt sich bei dem Erfindungsgegenstand aus, daß kein einzelnes Teil zur Unterbringung der Tastatur benötigt wird.

Erfindungsgemäß wird die die Bedienelemente von Fahrzeugkomponenten enthaltende Tastatur um das Display herum angebracht wird. Dabei ist das Display bei einem Personenkraftwagen in besonders vorteilhafter Weise in dem vorderen Bereich der Mittelkonsole angebracht. Auf diesem Display werden die einzustellenden Funktionen der Fahrzeugkomponenten vorzugsweise am Rand dargestellt. In unmittelbarer räumlicher Nähe zu diesen einzustellenden Funktionen der Fahrzeugkomponenten sind dabei als Bedienelemente die Schalter bzw. Regler - vorzugsweise Schieberegler - als äußere Umrandung des Displays angebracht. Diese Anbringung erfolgt dabei in vorteilhafter Weise so, daß bei der Bedienung dieser Schalter und Regler ein Ansprechen für den Benutzer deutlich spürbar ist.

Ein Ausführungsbeispiel der Erfindung ist in der Zeichnung schematisch dargestellt und wird im folgenden näher beschrieben. Die Figur zeigt dabei eine mögliche Anordnung von Schaltern und Reglern als Bedienelemente als äußere Umrandung des Displays.

Wie aus der Figur ersichtlich, werden auf dem Display 1 entsprechend der momentan eingeschalteten Fahrzeugkomponente verschiedene einzustellende Funktionen dargestellt. Ist die momentan eingeschaltete Fahrzeugkomponente beispielsweise die Klimaanlage, werden in der Spalte 1.1 als einzustellende Funktionen beispielsweise Schalter 1.1.1, 1.1.2 und 1.1.3 als Bedienelemente vorgesehen, wobei bei Betätigen des Schalters 1.1.1 die eingestellte Funktion der Klimaanlage vorwiegend in die linke Hälfte des Fahrzeuges wirkt. Das heißt, daß die von der Klimaanlage entsprechend der vorgegebenen Solltemperatur erzeugte Warm- oder Kaltluft vorwiegend die linke Hälfte des Fahrzeuges beeinflußt. Entsprechend wird bei Betätigen des Schalters 1.1.3 die von der Klimaanlage entsprechend der vorgegebenen Solltemperatur erzeugte Warm- oder Kaltluft vorwiegend die rechte Hälfte des Fahrzeuges beeinflussen. Die Betätigung des Schalters 1.1.2 "Automatik" bewirkt eine automatische Einstellung der Ausblashöhe, d.h., die Festlegung der vertikalen Lage der Luftaustrittsöffnungen in der Instrumententafel, in die die von der Klimaanlage entsprechend der vorgegebenen Solltemperatur erzeugte Warm- oder Kaltluft abgegeben wird. Dabei wird Warmluft hauptsächlich nach unten abgegeben und Kaltluft wird hauptsächlich durch die mittleren Luftaustrittsdüsen ausgegeben. Das Gebläse wird stufenlos nach Maßgabe von Fahrgeschwindigkeit, Kühlwassertemperatur und der Abweichung der Temperatur von dem Temperatursollwert automatisch geregelt.

In der Zeile 1.2 sind weitere Schalter 1.2.1-1.2.4 als Bedienelemente vorgesehen, deren Wirkungsweise im folgenden erläutert werden soll. Durch Betätigen des Schalters 1.2.1 der Zeile 1.2 wird die Defrostung eingeschaltet. Durch Betätigen des Schalters 1.2.2 der Zeile 1.2 wird nach dem Abschalten des Motors die Restwärme des Kühlwassers genutzt, um den Innenraum des Fahrzeuges weiter zu heizen. Durch Betätigen des Schalters 1.2.3 der Zeile 1.2 wird die Klimaanlage auf Umluftbetrieb geschaltet. Durch Betätigen des Schalters 1.2.4 der Zeile 1.2 wird die von der Klimaanlage angesaugte Luft durch ein Aktivkohlefilter gefiltert.

In der Spalte 1.3 sind Schalter 1.3.1-1.3.3 als Bedienlemente angeordnet zur manuellen Einstellung der Ausblashöhe, d.h. der Festlegung der vetikalen Lage der Luftaustrittsöffnungen in der Instrumententafel, in die die von der Klimaanlage entsprechend der vorgegebenen Solltemperatur erzeugte Warm- oder Kaltluft abgegeben wird. Dabei wird bei Betätigen des Schalters 1.3.1 die von der Klimaanlage entsprechend der vorgegebenen Solltemperatur erzeugte Warm- oder Kaltluft zunehmend nach oben abgegeben. Bei Betätigen des Schalters 1.3.3 wird die von der Klimaanlage entsprechend der vorgegebenen Solltemperatur erzeugte Warm- oder Kaltluft zunehmend nach unten abgegeben. Bei Betätigen des Schalters 1.3.2 wird die von der Klimaanlage entsprechend der vorgegebenen Solltemperatur erzeugte Warm- oder Kaltluft nach oben und unten abgegeben. Wird der Schalter 1.1.2 betätigt (Automatik), wird die Wirkung aufgrund der Betätigung der Schalter 1.3.1, 1.3.2 und 1.3.3 aufgehoben. Umgekehrt wird der Schalter 1.1.2 durch eine der Festfunktionen 1.3.1, 1.3.2 oder 1.3.3 überlagert.

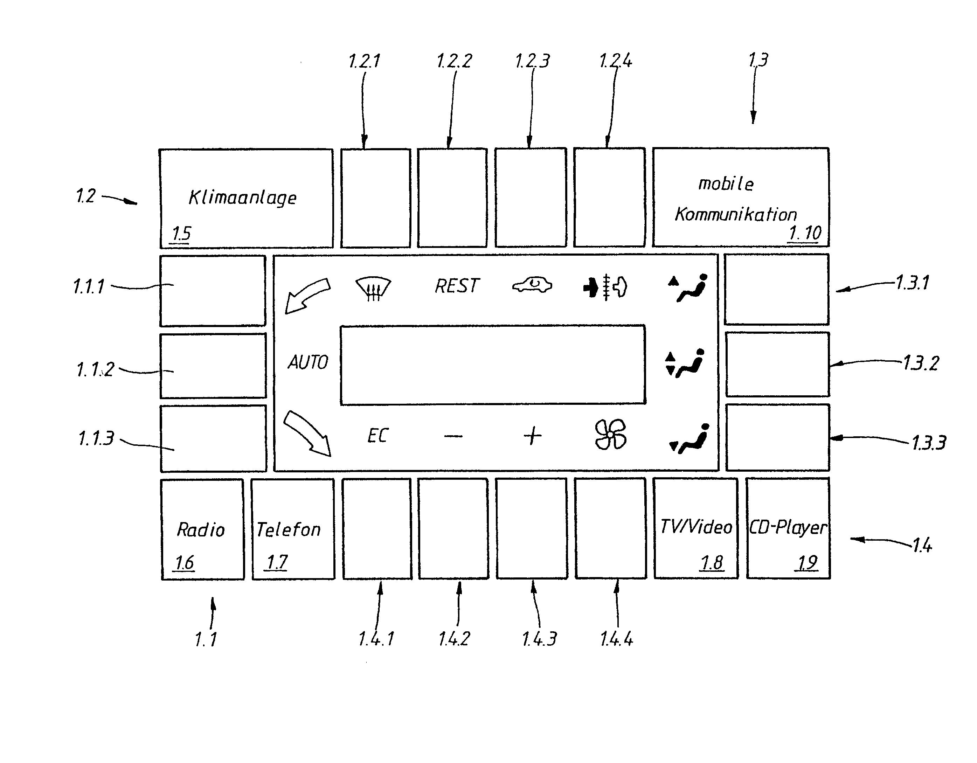

In der Zeile 1.4 sind weitere Schalter 1.4.1-1.4.4 als Bedienelemente angeordnet, die bei eingeschalteter Klimaanlage in dem Ausführungsbeispiel der Fig. 1 Funktionen derart annehmen, daß bei Betätigen des Schalters 1.4.1 der Energieverbrauch der Klimaanlage reduziert wird, indem der Kältekompressor ausgeschaltet wird. Diese Reduzierung kann dabei auch in Abhängigkeit der Motordrehzahl derart erfolgen, daß bei Leerlaufdrehzahl der Kältekompressor abgeschaltet wird und daß bei einer Motordrehzahl größer als die Leerlaufdrehzahl der Kältekompressor wieder zugeschaltet wird. Dabei kann außerdem noch der Ladungszustand der Batterie berücksichtigt werden. Nach Betätigen des Schalters 1.4.4 kann durch Betätigung der Schalter 1.4.2 und 1.4.3 die die Gebläseleistung zusätzlich zum Automatikmodus verändert werden.

Wird nun eine andere Fahrzeugkomponentenanwahltaste als die Fahrzeugkomponentenanwahltaste 1.5 der Klimaanlage betätigt, erscheint auf dem Display 1 an dem Rand in entsprechender Zuordnung zu den einzelnen Schaltern eine symbolische Darstellung der Funktion einzelner Schalter. Wird beispielsweise die Fahrzeugkomponentenanwahltaste 1.6 betätigt, wird das Radio eingeschaltet. Am Rand des Displays 1 erscheint dann als symbolische Darstellung einzustellender Funktionen beispielsweise die Möglichkeit der Auswahl eines Wellenlängenbereiches (KW, MW, LM, UKW) die Einstellung der Lautstärke, der Balance, die Einschaltung der ARI-Funktion, Auswahl von fest eingegebenen Sendern. Entsprechend erscheinen am Rand des Displays 1 andere symbolische Darstellungen einzustellender Funktionen bei Betätigen einer anderen Fahrzeugkomponentenanwahltaste. Bei Betätigen der Fahrzeugkomponentenanwahltaste 1.7 wird das Telefon eingeschaltet, bei Betätigen der Fahrzeugkomponentenanwahltaste 1.8 wird das TV/Video-System eingeschaltet, bei Betätigen der Fahrzeugkomponentenanwahltaste 1.9 wird der CD-Player eingeschaltet und bei Betätigen der Fahrzeugkomponentenanwahltaste 1.10 wird die mobile Kommunikation eingeschaltet. Mittels Betätigung dieser Fahrzeugkomponentenanwahltaste 1.10 werden beispielsweise auf dem Display 1 Funktionen derart dargestellt, daß bei in einem Pulk fahrenden Fahrzeugen durch Anwahl der entsprechenden Funktionen eine Funkverbindung zwischen diesen Fahrzeugen möglich wird. Ebenso kann als einstellbare Funktion nach Anwahl dieser Fahrzeugkomponentenanwahltaste 1.10 vorgesehen sein, daß auf dem Display 1 Informationen dargestellt werden, die von einem zentralen Verkehrsrechner abgerufen werden können.

Es liegt im Rahmen der Erfindung, weitere Fahrzeugkomponentenanwahltasten zur Anwahl weiterer Fahrzeugkomponenten vorzusehen, deren einstellbare Funktionen dann ebenfalls am Rand des Displays 1 in unmittelbarer Zuordnung zu den Schaltern 1.1.1-1.1.3, 1.2.1-1.2.4, 1.3.1-1.3.3 sowie 1.4.1 -1.4.4 dargestellt werden. Selbstverständlich ist es auch möglich, eine andere Anzahl von Schaltern vorzusehen.

Die Schalter 1.4.2 und 1.4.3 sind dabei in dem Ausführungsbeispiel der Figur als Schalter ausgebildet, die nicht lediglich binäre Werte annehmen, sondern bei deren länger anhaltender Betätigung eine Verstellung einer Größe in einer bestimmten Richtung mit digitalisierten Schritten in vielen Stufen ermöglicht. Grundsätzlich ist es möglich, bei der Anwahl einer anderen Fahrzeugkomponente als der Klimaanlage den Erfordernissen der dann einzustellenden Funktionen der angewählten Fahrzeugkomponenten andere Schalter und/oder eine andere Anzahl von Schaltern so zu belegen, daß deren länger anhaltende Betätigung eine Verstellung einer Größe in einer bestimmten Richtung mit digitalisierten Schritten in vielen Stufen ermöglicht. Alternativ können für derartige Funktionen bei allen Fahrzeugkomponenten anstelle einzelner Schalter auch zumindest einzelne Schieberegler als Bedienelemente als äußere Umrandung des Displays vorgesehen sein.

**Patentansprüche**

1. Anordnung von Bedienelementen von Fahrzeugkomponenten,
   - wobei durch Betätigen von Fahrzeugkomponentenanwahltasten eine der Fahrzeugkomponenten eingeschaltet wird,

- wobei auf einem Display eine symbolische Darstellung der einzustellenden Funktionen der eingeschalteten Fahrzeugkomponente erfolgt,
- wobei eine definierte Zuordnung der einzustellenden Funktionen der Fahrzeugkomponenten zu Schaltern besteht, bei deren Betätigung einzustellende Funktionen der Fahrzeugkomponente entsprechend geschaltet werden,

**dadurch gekennzeichnet,**

- daß die Bedienelemente (1.1.1-1.1.3, 1.2.1-1.2.4, 1.3.1-1.3.3, 1.4.1-1.4.4) der einzustellenden Funktionen am Rand des Displays (1) in unmittelbarer räumlicher Zuordnung zu der symbolischen Darstellung der einzustellenden Funktionen angebracht sind.

2. Anordnung von Bedienelementen von Fahrzeugkomponenten nach Anspruch 1,
**dadurch gekennzeichnet,**
daß als Bedienelemente (1.1.1-1.1.3, 1.2.1-1.2.4, 1.3.1-1.3.3, 1.4.1-1.4.4) Schalter vorgesehen sind.

3. Anordnung von Bedienelementen von Fahrzeugkomponenten nach Anspruch 2,
**dadurch gekennzeichnet,**
daß einzelne Bedienelemente (1.4.2, 1.4.3) als Schalter ausgebildet sind, bei deren länger anhaltender Betätigung eine Verstellung einer Größe in einer bestimmten Richtung mit digitalisierten Schritten in vielen Stufen erfolgt.

4. Anordnung von Bedienelementen von Fahrzeugkomponenten nach Anspruch 1,
**dadurch gekennzeichnet,**
daß einzelne Bedienelemente (1.4.2, 1.4.3) als Schieberegler ausgebildet sind, und daß die anderen Bedienelemente (1.1.1-1.1.3, 1.2.1-1.2.4, 1.3.1-1.3.3, 1.4.1, 1.4.4) als Schalter ausgebildet sind.

Europäisches
Patentamt

**EUROPÄISCHER
RECHERCHENBERICHT**

Nummer der Anmeldung

**EP 91 10 5932**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 628 333 (B.M.W.)<br>* ganzes Dokument * | 1,2 | B 60 K 37/00 |
| X | DE-C-3 514 438 (PORSCHE)<br>* ganzes Dokument * | 1,2 | |
| X | WO-A-8 706 893 (ELECTRO-MECHANICAL PRODUCTS)<br>* Seite 23, Zeilen 11-15; Figuren 1,2,7 * | 1-3 | |
| X | EP-A-0 057 892 (SIEMENS)<br>* ganzes Dokument * | 1,2 | |
| A | DE-A-3 346 370 (BOSCH)<br>* Zusammenfassung; Anspruch 9; Figuren * | 1-4 | |

| | | | RECHERCHIERTE SACHGEBIETE (Int. Cl.5) |
|---|---|---|---|
| | | | B 60 K<br>B 60 R<br>G 07 C<br>H 01 H<br>H 05 K |

Der vorliegende Recherchenbericht wurde für alle Patentansprüche erstellt

| Recherchenort | Abschlußdatum der Recherche | Prüfer |
|---|---|---|
| Berlin | 18 September 91 | KRIEGER P O |